# EUROPEAN PATENT SPECIFICATION

(11) **EP 2 818 224 B1**
(45) Date of publication and mention of the grant of the patent: **01.06.2016**
(21) Application number: 14173385.7
(22) Date of filing: 23.06.2014
(51) Int. Cl.: B01D 46/24, B01D 46/00, B01D 53/10, B01D 53/50

(54) **Device for the reduction of emissions**
Vorrichtung zur Reduzierung der Emissionen
Dispositif pour la réduction des émissions

(30) Priority: 24.06.2013 IT MI20131049
(43) Date of publication of application: 31.12.2014
(73) Proprietor: Linari Engineering S.r.l., 58024 Valpiana (GR) (IT)
(72) Inventor: Linari, Stefano, I-58024 Massa Marittima (GR) (IT)
(74) Representative: De Gregori, Antonella

(56) References cited:
- EP-A1- 0 550 905
- EP-A1- 0 611 590
- EP-A2- 0 865 815
- DE-A1- 10 244 660
- US-A1- 2008 006 155

## Description

### Technical Field

The present invention refers to the field of devices for reduction of emissions of sulphur oxides (SOx) and fine particles (PM), in particular, but not limitative, for propulsion systems, and more in detail for marine propulsion systems, as large marine engines.

### State of the art

To the state of the art are known devices suited for reducing the emissions of sulphur oxides (usually indicated as SOx) from a flow of exhausted gases of an internal combustion engine.

The reduction of emissions of SOx from exhausted gases (in order to obtain a reduced environmental impact in terms of pollution) is particularly important in the event the fuel used is a "heavy fuel", for example marine Heavy-Fuel-Oil or the like.

In particular, said reduction finds an important application in the marine and industrial field, wherein the mass of exhausted gases is particularly high (mainly due to the high powers involved) and rich in sulphur oxides and particulate given by unburned hydrocarbons.

Among the known methods for reduction of sulphur oxides to the state of the art are known those under the name of "dry scrubbers" namely particular types of washing towers, whose peculiar feature is that of not saturating the stream of gases with liquids (opposite to the so-called "wet scrubbers").

In the dry scrubbers the gases are chemically treated by reaction with a sorbent, depriving them of a certain portion of pollutants (in the specific case SOx); without wish to further detailing, it is observed that in these types of scrubbers the main mechanism for reduction of pollutants is linked to an adsorption phenomena.

Inside the "dry scrubbers" are identified, among others, those with dry sorbent injection (so-called "DSI, Dry Sorbent Injectors), which, in short, use the emission of alkaline materials in the gaseous stream of the exhausted gases to react with acidic gases (for ex. SOx) contained therein.

In a dry scrubber it can be generally distinguished two main sections: a first section, of mixing and reaction of the sorbent material in the gaseous stream of the exhausted gases, and a second section of removal of particles formed by reaction of the sorbent material with the acidic gases.

The first section comprises a reaction chamber in which the stream of combustion gases (dirty, in the sense that they contain SOx) mixed with the sorbent are subjected to the adsorption chemical reaction; the section of removal instead comprises filtering units for separating the clean gases (in the sense that from the mass of gases, the SOx remaining in the stream in the form of particles have been chemically captured) from the particles generated by the reaction of the sorbent with the acidic gases and dispersed therein.

A first drawback of these types of devices is connected with their short flexibility: the sorbent is usually injected by pneumatic injection specifically achieved for a determined type of sorbent (for example, according to the chemical composition and to its physical state).

In case it is wished to substitute the type of sorbent, its chemical composition or its physical state (for example, particle size) it is necessary, in these devices, an intervention of redesign and substitution of the part of sorbent injection, involving considerable time and costs.

A further consequence is that the sudden change, during a running phase, of the sorbent is not applicable, except for exceptional cases, that is, only when one wants to use sorbents which are chemically/physically compatible.

It should be noted, incidentally, that a change of sorbent could show to be interesting in case one wishes to work with variable temperatures of the exhausted gases: the temperature of the exhausted gases indeed affects the kinetics of the chemical reaction and could suggest the use of a specific type of sorbent rather than another to obtain the maximum efficiency.

In the known systems, as above said, that change of sorbent is impossible, except for occasional cases.

Known solutions are illustrated for example in the US patents US 5,215,557 and US 4,676,690, wherein the dry scrubber is combined with an electro-filter (also known as electrostatic filter).

With regard to the first section, it is required to uniformly spread the sorbent in the stream of exhausted gases, for example by use of a plurality of sprayers which homogenously distribute it in the stream of dirty gases, so that the most part of the mass of the dirty gases is chemically treated.

The space arrangement of the sprayers with respect to the section of the exhausted gases entrance has a key role for the dry scrubber performance, as it affects the whole mass of the treated gases.

The provision of sprayers and their space arrangement implies therefore, additional to further costs, also a careful fluid-dynamic design, which would make said dry scrubbers rather complex.

The provided solutions of electro-filter, although functional, present however a certain additional construction complexity and quite remarkable costs.

In order to avoid electro-filters, it is known to use some dry scrubbers in which the filtering element is a filtering fabric sleeve crossed from the outside to the inside from the gases: the particles are collected on the external surface of the sleeve and the gas transits inside the sleeve to be sent to the discharge.

The whole performance of such devices is not however totally optimal, as a certain portion of dirty gases does not completely react; it is thus interesting to be able to increase the performance (or in other words, the efficiency) of the device.

Moreover, this solution, although it generally presents a low cost with respect to those provided with electro-filter, shows however the problem to require an accurate cleaning of the sleeve, to avoid that the particles deposited on its surface creates an inacceptable load loss in the stream of the gases.

That cleaning is carried out by means of shaking or counter-washing systems, which provide a percussive mechanical action on the sleeve to promote detachment of the particles or a counter-pressure generated by the injection of compressed air inside the sleeve, so that the flow of compressed air favours detachment of the particles from the same sleeve.

Another restriction to the use of filters with fabric sleeves is the limited running temperature, usually lower than that of the exhausted gases of endothermic engines, which implies the arrangement of gas/gas heat exchangers (aerotherm) or cooling towers in which cool water is atomized inside the hot gaseous stream to allow its easy evaporation to withdraw heat from the same gases, which may reach the sleeves at a lower temperature, compatible with the characteristics of the sleeve itself.

A further problem relates to the space configuration of these scrubbers: in the known systems indeed the path followed by the gases is rather tortuous and this implies great load losses.

The Applicant observed that in the marine field, especially in the field of passenger ships (for example cruise ships, ferries or the like), these problems are exasperated; indeed, for example, one cannot think to use shaking or percussion cleaning systems, or even big aerotherms, as they generate vibrations and noises which are transmitted (and, in some cases, amplified) by the hull and reduce the acoustic comfort of sailing to limits which are not acceptable.

The use of water cooling towers instead requires a considerable encumbrance on board and availability of soft water, or however provided with controlled chemical/physical characteristics to avoid excessive corrosion, usually expensive.

### Purposes and summary of the invention

A purpose of the present invention is that of overcoming the drawbacks met in the prior art.

In particular, a purpose of the present invention is that of providing a device for reducing the emissions of sulphur oxides and fine particles, in particular a dry sorbent injection DSI dry scrubber, which is effective, easy to be manufactured, suited for use in the marine field, also in the field of passenger transportation field, as well as relatively inexpensive.

A further purpose of the invention is that of providing such a device which is relatively noiseless.

This and other purposes are reached through a device according to the attached main claim, having moreover the optional advantageous features of the attached subclaims, which are meant to be integral part of the present description.

According to a first aspect it has been thought to convey the gases to be filtered inside ceramic filtering sleeves, causing a transfer of the fuel gases from the inside to the outside of the latter, and simultaneously providing a cleaning system inside the sleeves and the chambers to allow to clean the latter in a simple and inexpensive manner.

In a preferred embodiment the cleaning device comprises brushes moving inside the chambers and/or sleeves and are in contact with the respective internal walls: in this way are avoided noises generated by the known percussion systems succeeding to reduce load losses, so as to be able to arrange the device subject-matter of the invention also on a ship, in particular on a passenger ship.

Accepting some drawbacks related to noise, instead, it is possible to think to use as cleaning device also some simple chains which clean chambers and/or sleeves. In any case, regardless of the type of the cleaning device used, the Applicant observed that the housing of a cleaning device inside the chambers presents an unexpected advantage: on such devices indeed a part of unreacted sorbent is accumulated.

The same cleaning device, charged with the sorbent accumulated thereon, constitutes therefore a localized reaction point, which, charged with the gases, noticeably increases the efficiency of the device.

A further independent aspect or in combination with the first aspect, provides to make available a device for reduction of emissions of pollutants, in particular sulphur oxides and fine particles, from a stream of combustion gases, in particular a dry sorbent injection DSI dry scrubber provided with a distributor of fluid in the mixing section, which is connected with a plurality of reaction chambers of the second section to distribute the stream of dirty gases added with the sorbent material in the plurality of reaction chambers; moreover, the removal section comprises a plurality of filtering sleeves, each one aligned and in fluid communication with a correspondent reaction chamber so that said cleaned stream of gases, in which said fine particles are dispersed in suspension, crosses said filtering sleeves from the inside to the outside. Preferably the sleeves and the chambers are cylindrical and have, at least in a zone of reciprocal connection, the same diameter, so that they can be connected one to the other.

In this way a plurality of advantages are obtained: not only the gases are treated homogeneously thanks to the distribution in a plurality of chambers separated from each other, but moreover the fine particles are withhold by the filtering sleeves in correspondence of an internal face of each sleeve and can be more easily removed.

According to a further independent aspect, or in combination with the first or with the second aspect, it is provided a system of intake of the sorbent of the purely mechanical type, provided with a hollowed dispensing cylinder wherein it rotates a body provided with helical vanes, so that it is possible to release different types of sorbent.

Further advantageous features are subject-matter of the attached claims, which are meant to be integral part of the present invention.

### BRIEF DESCRIPTION OF THE DRAWINGS

The invention will be described hereinafter with reference to non-limitative examples, provided with an illustrative and non-limitative purpose in the attached drawings. These drawings illustrate several aspects and embodiments of the present invention and, where appropriate, reference numbers illustrating structures, components, materials and/or elements which are similar in different figures are indicated by similar reference numbers.
Figure 1 illustrates a perspective view of a device for reduction of emissions according to the present invention;
Figures 2 and 3 illustrate side views of the device of the previous figure;
Figure 4 illustrates a section view along plane A of figure 3 of the device of the invention;
Figure 5 illustrates a section view along plane B of figure 2 of the device of the invention;
Figure 6 illustrates a section view along plane C of figure 3 of the device of the invention;
Figure 7 illustrates a section of a reaction chamber and of the related sleeve, part of the device of the previous figures, arranged with a cleaning device according to the invention;
Figure 8 illustrates a section view of a detail of figure 7;
Figure 9 illustrates a side view of a detail of figure 8;
Figure 10 illustrates, a perspective view of the reaction chamber, of the related sleeve and of part of the cleaning device of figure 7;
Figure 11 illustrates a detail of the sorbent loading device arranged in the device for reduction of emissions according to the invention.

### DETAILED DESCRIPTION OF THE INVENTION

While the invention can be subjected to various modifications and alternative constructions, some related embodiments are illustrated in the drawings and will be described hereinafter in detail.

It shall be intended, however, that there is no intention to restrict the invention to the specific embodiment illustrated, but, on the contrary, the invention means to cover all the modifications, alternative constructions, and equivalents falling within the scope of the invention as defined into the claims.

The use of "for example", "etc.", "or" indicates that alternatives without limitations, unless otherwise indicated, are not excluded.

The use of "includes" means "includes, but it is not limited to"unless otherwise indicated.

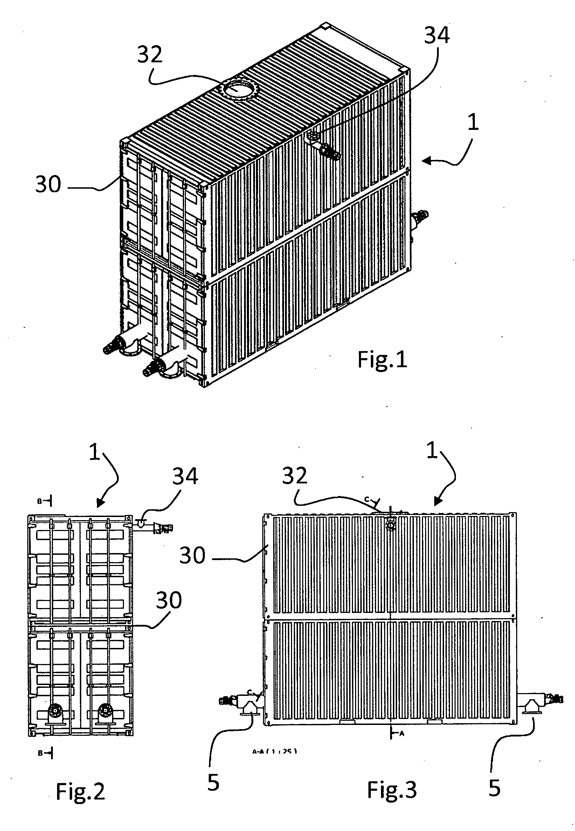

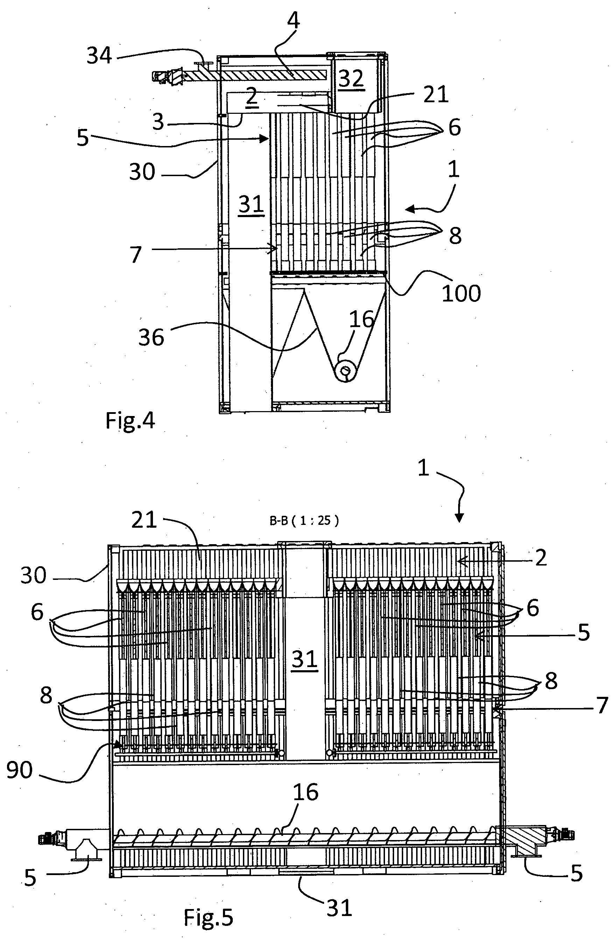

With reference to figures 1-6 therein is illustrated a device for reduction of emissions of pollutants, in particular sulphur oxides SOx and fine particles, from a stream of combustion gases according to the invention, indicated in its whole with reference 1. Externally, the device 1 presents a housing case 30 in which the functional parts thereof are assembled.

The housing case presents, in this non-limitative embodiment, manways and removable bulkheads to have access in its inside for inspection and/or maintenance interventions; the arrangement of the manways and bulkheads fall within the knowledge of the skilled person in the art and is known *per se* according to the embodiments and overall dimensions of the case 30, on which therefore we do not dwell over.

The external walls of the case 30 are advantageously insulated.

On the external surface of the case it can be seen the mouth of an inlet duct 31 of the dirty combustion gases, coming from a marine internal combustion engine (not illustrated), for example a diesel cycle engine. The mouth of the duct 31 opens at the bottom of the case, with reference to a working configuration of the device 1.

On the case 30 it is then provided a discharge mouth of a duct 32 for "clean" gases.

Through the terms "dirty" and "cleaned" are indicated here and in the following claims the gases respectively before the chemical/physical treatment occurring in the device 1 and after said treatment, which we will refer to in detail shortly.

In correspondence of a side face of the case 30 it is then provided loading inlet 34 for a sorbent, in communication with a special loading screw 4 which constitutes in this embodiment the device of mechanical supply of the sorbent which is dispersed in the stream of dirty gases.

The loading screw 4 is specifically destined to insert a powder or granular sorbent, it is therefore achieved (and sized) according to that functionality.

It should be noted as of now that the mechanical supply (not exclusively pneumatic) of the sorbent through the loading screw 4 allows to change the chemical/physical type of sorbent also during a common phase of use of the device 1, making the latter thus much flexible: it is indeed possible to select the sorbent to use according to parameters such as the running temperature or that of the gases.

In principle it could be also provided devices of mechanical supply of sorbent of a different type from that of the loading screw of the preferred example, for example: a disc, possibly finned on one face, rotating at high speed that, by centrifugal effect, spreads the sorbent deposited on it, a dispenser having calibrated rotating compartments or a series of more reciprocating piston unloaders.

It is then observed in correspondence of the side faces of the case 30 also the discharge outlet 5 (one or more, according to the amounts of gases to be treated) for the fine particles, which are aligned and in communication with related unloading screws 16.

In the device 1 three sections are ideally provided, operatively connected with each other: a mixing section, a reaction section and a removal section.

The mixing section coincides, in practice, with an upper plenum of the device.

The first section, of mixing 2, comprises an entrance 3 for the stream of dirty gases, which coincides in this example with the end mouth of the duct 31; the first section comprises then the dispensing device 4 (or the loading screw, in this example) of the sorbent material in the stream of dirty gases.

Still in the mixing section 2 is comprised a fluid distributor 21 whose function is that of distributing the flow of gases added with sorbent to the reaction chambers; the fluid distributor is in this embodiment a conveyer, which in some embodiments (not illustrated) comprises conveying fins.

It should be observed as of now that in the first section 2 the dispensing device 4 is arranged immediately in front of the entrance and the latter opens upwards.

In practice, therefore, the dispensing device 4 is placed immediately above the open mouth of the duct 31. This allows an optimum distribution of the sorbent without using complex dispensing nozzles: the powder sorbent is indeed let to drop by simple gravity and meets the stream, or flow, of gases, which raises from below and homogeneously mixes therewith; the turbulence generated in the mixing section itself then contribute to improve said distribution homogeneity.

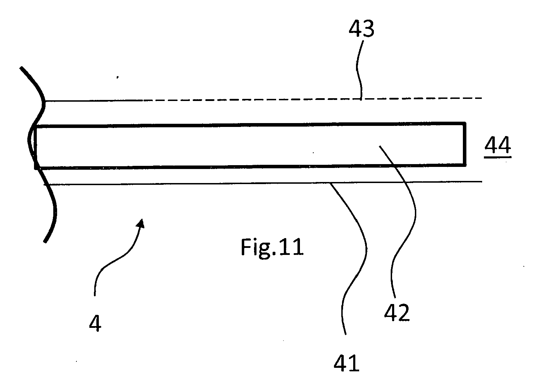

With reference to the detail of figure 11, the loading screw 4 comprises a rotatable body with helical vanes 42 mounted inside a casing 41 substantially cylindrical, open in correspondence of the free base 44 and provided with supply holes 43 in correspondence of the portion of the side face not facing the mouth of the duct 31: in this way the supply of the sorbent is homogeneous and involves the most part of the incoming gases.

With regard to the vanes 42 it should be noted as of now that, according to requirements, they could be at a constant step or variable.

In this second case the variability of the helical vanes 42 can be used to allow uniformity of the supplied amount when the distance from the feeding zone of the sorbent increases (at the beginning, indeed, there will be a great amount of sorbent, whereas towards the end of the vanes the amount of sorbent will result reduced).

The second section, of reaction 5, is placed downstream of the first section 2 (in the sense of passage of the gases during running) and comprises a plurality of reaction chambers 6.

In the illustrated embodiment the reaction chambers 6 are segments of cylindrical duct.

In these reaction chambers 6 occurs, as seen later in detail, the reaction which chemically separates the pollutant from the mass of gases, generating fine particles which in this section result to be still in suspension in the mass of "clean" gases.

The third section, of removal of fine particles, is indicated through reference 7 and is placed downstream of the second section.

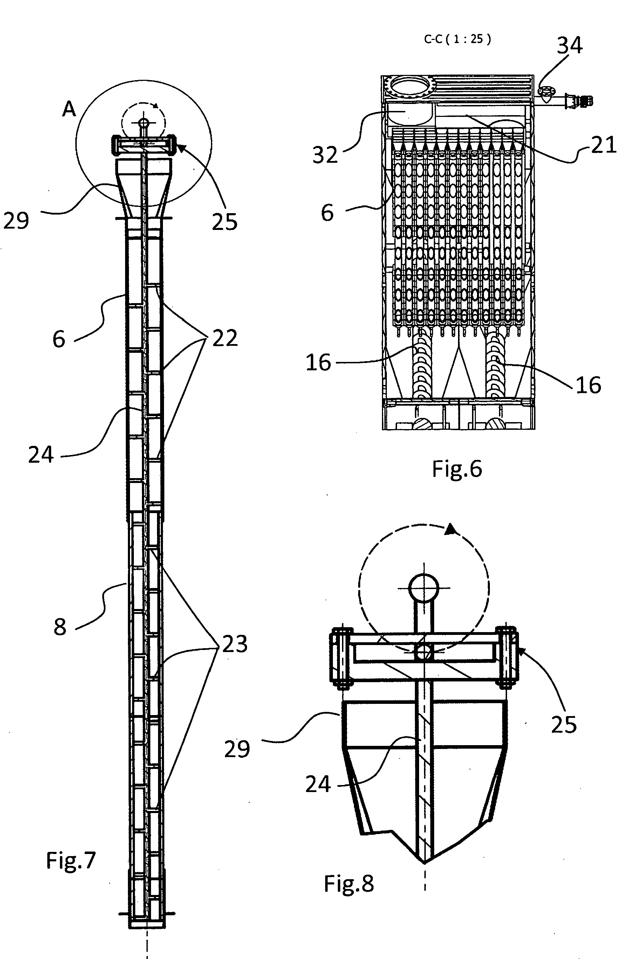

It comprises a mechanical filter for the separation of said fine particles from said mass of clean gases which, specifically in the present embodiment, comprises a plurality of filtering sleeves 8, each aligned and in fluid communication with a correspondent reaction chamber 6, as clearly seen also from figure 7. Under this circumstance it is also outlined that both the chambers 6 and the sleeves 8 are preferably cylindrical and have substantially the same diameter, at least in the zone of reciprocal coupling: this allows connecting the ones to the others, obtaining a single duct.

The filtering sleeves 8 are preferably made of porous ceramic, in particular sintered silicon carbide with a porosity suited to withhold also fine particles generated by unburned hydrocarbons with a pore diameter of the order of some micro-meters.

Other ceramic materials utilizable for the sleeves can be used for this purpose provided that they ensure sufficient resilience and high operating temperatures. The sleeves 8 are open at the bottom so as to allow the discharge of fine particles in one or more hoppers 36, arranged immediately below the sleeves, which convey the fine particles towards the screws 16 for removal or bucket conveyors (not shown in figure).

The chamber in which the hoppers 36 are housed is separated by a septum 100, so as said chamber (or "collecting plenum") communicates only with the inside of the sleeves but not with the internal volume of the case 30 and comprised in the sleeves, wherein is collected the cleaned gas which is then conveyed to the discharge 32.

Observing thus the device 1 in its whole, it is observed that, in the operating configuration, the first mixing section 2 is arranged immediately above the second reaction section 5, which is in turn arranged immediately above the third section 7 of removal.

With reference now to the figures 7-10, in them is shown in detail an assembly and some details of a reaction duct 6 connected with the respective ceramic filtering sleeve 8.

As observable, the diameter of the duct 6 and that of the sleeve 8 are substantially similar, so that they can be coupled engaging one into the other and fastened through a known method (for example by means of screw collars or the like) or through refractory cements.

In these figures it can be noted also a particular embodiment of the first device 1 of the invention: it comprises some mobile brushes 22 arranged inside each reaction chamber 6 and some mobile brushes 23 arranged inside each sleeve 8; the brushes 22, 23 are in contact with the internal surface of the chamber 6 and/or the sleeve 8.

It should be noted as of now that in other embodiments are provided brushes 22, according to requirements, being the brushes 23 absent.

The brushes 22, 23 (of each couple chamber 6 and correspondent sleeve 8) are connected with each other by a actuating means in common, in the example a common actuating rod 24 which develops in a longitudinal sense with respect to the development of the chamber 6 and/or of the sleeve 8 and is housed therein.

The actuating rod 24 presents a free external end which is coupled to a joint 25 of motion transformation, from rotary to linear reciprocated motion.

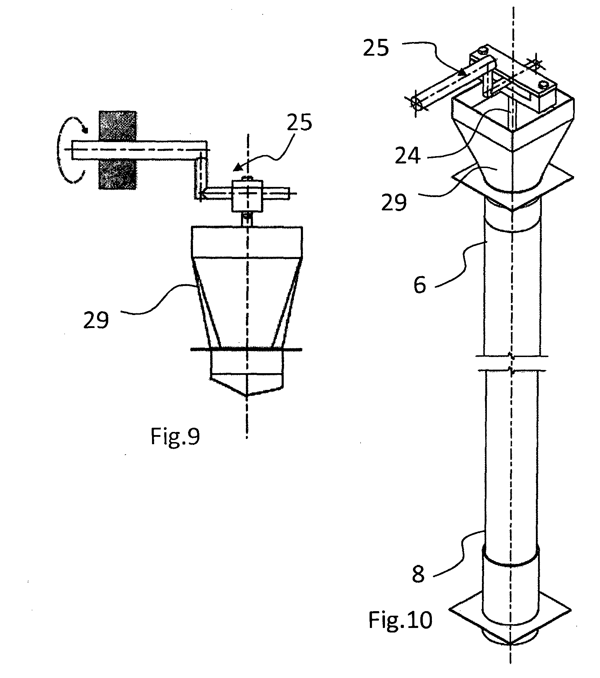

Said joint 25 is of the known type *per se* and it is operatively connected with an engine (not illustrated) generating a rotary motion, which, transformed by the joint 25, actuates the rod 24 moving it in a reciprocating linear manner along the chamber 6 and the sleeve 8: the brushes 22,23 clean thus from the fine particles the internal faces of the chamber 6, or the sleeve 8 or of both (as in the illustrated example). The joint 25 in figure 9 has been represented by the end of the rod 24 arranged nearby the head 29, but it can also be mounted at the opposite end of the rod 24, near the sleeve 8 (not illustrated in figure), according to requirements.

In alternative solutions not illustrated, accepting a higher noise of the device in its whole, the cleaning means 22, 23 are instead chains extending regularly in the chamber 6 and in the sleeve 8 connected therewith. The chains can be actuated similarly to the rods, with an actuating engine, or - in the case in which the device 1 is mounted in self-propelled works (for example boats)- it is the same movement of the self-propelled work which moves the chains and allows them to carry out the cleaning operation of the chambers/sleeves.

Still another alternative implies that the brushes 22, 23 are provided, analogously to the above described, but the brushes 22, 23 are connected by chains or more in general by articulated or flexible connections (for example wires) in place of the above described rod.

In this sense it can be therefore said that the brushes 22, 23 are actuated, for each chamber/sleeve couple, by an actuating element in common, which can be both rigid (rod or the like) and articulated (chains) or flexible (wires).

The movement of such actuating elements can be obtained analogously to the above described in the case of the rigid element (rod) and therefore we do not dwell further on it.

The head 29 of the chamber 6, facing the distributor 21 is funnel-enlarged, to promote input of the gases. The lower section of the head 29 can have different dimensions from chamber to chamber in order to create a concentrated load loss which helps the uniform distribution among the chambers of the amount of gases and sorbent.

According to an optional and advantageous improvement, in correspondence of the end portion of each sleeve 8 is provided a nozzle 90 for spreading a gas.

More in particular, the spreading nozzle 90 is operatively connected with a blower or fan for spreading gas under pressure and it is directed in a way to supply the gas under pressure inside the sleeve 8, in the opposite sense with respect to the movement of the stream of gases, during its running.

In the preferred embodiment the blower or the fan are connected with a gas source, preferably a source of discharge gases cleaned downstream of the filtering sleeves.

With regard to the reaction of formation of fine particles, in the case in which the pollutants to be removed are sulphur oxides SOx, the sorbent preferably used is hydrate lime (calcium hydroxide) in powder, preferably with a particle size lower than 10 micron, which presents low running risks and much reduced costs.

The chemical reactions developing in the device 1 are, in short, the following:

Ca (OH) ₂ + SO₂ → CaSO₃ + H₂O

Ca(OH)₂ + SO₂ + ½ O2 → CaSO₄ + H₂O

Ca(OH)₂ + SO₃ → CaSO₄ + H₂O

The fine particles forming are therefore composed mainly of gypsum and hydrate lime which did not completely react.

Said chemical reaction is however generally known per se and therefore we will not dwell further on this issue.

Other alternative sorbents can be live lime (calcium oxide) or baking soda, limestone (calcium carbonate) and soda in powder.

It will be now described the operation of the device 1, in the hypothesis in which the pollutants to be removed from the gases are sulphur oxides SOx and fine particles and the sorbent material is lime in powder. The combustion gases of the endothermic engine go up in the chimney of the latter (not illustrated) and reach the duct 31 through which they enter the device 1.

Such gases, "dirty", get thus in contact with the lime in powder which is released by the dispensing device 4 directly in the mass of gases.

The amount of sorbent to supply is automatically controlled by an electronic system (not illustrated) which detects both the emissions to the chimney of the ship after the device 1 and other process variables (for example, amount and temperature of the "dirty" gases).

The homogeneous distribution, as mentioned, is ensured both by the fact that the lime is released immediately before the open mouth of the duct 31, and by the fact that the mass of moving gases hits the screw 4 at high speed, keeping it clean (in particular keeping the dispensing hollowed external surface clean).

The gases added with the sorbent (lime) - which is starting to chemically react with the sulphur oxides - are thus input through the distributor 21 into the reaction chambers 6.

While the dirty gases and the sorbent cross the chambers 6 it occurs, or it completes, the chemical reaction between lime and sulphur oxides SOx, which generates the fine particles (gypsum and lime unreacted) which remains in suspension in the gases, and are now "cleansed" from pollutants.

Going further, towards the bottom, inside the chambers 6 the mass of gases reaches the sleeves 8: the gases go out thus from the same sleeves and are collected in the volume present externally among the various sleeves, to go up then towards the discharge duct 32 which conveys them to a chimney (not illustrated).

The fine particles derived from the injection of sorbent and from the unburned hydrocarbons, instead, is collected in correspondence of the internal surfaces of the ducts 6 and mostly of the sleeves 8.

It detaches therefrom, both naturally, and due to the action of the cleaning devices, such as the brushes 22 and 23, to drop then in the collecting plenum wherein through the hopper 36 is conveyed to the discharge screws 16 to be, finally, discharged and stored for a next disposal.

It should be noted that to avoid spillage of the gases from the screws 16 together with the fine particles they are provided with star valves (or rotary valves) which allow to discharge only the solid (fine particles) avoiding simultaneous exiting of gases. With regard to the brushes 22, 23, they may run in continuous or intermittently: actuated by the joint 25 (in turn driven by an engine) the rod 24 makes the brushes 22 and 23 move in the chambers 6 and in the sleeves 8, in contact with the internal walls thereof, which are thus cleaned by mechanical action, without generating noise.

Although in the present example the brushes are moved with an alternating rectilinear motion with respect to the internal walls of sleeves and chambers, it should be observed as of now that the brushes could be also rotating brushes; in this case it will be provided a shaft moved in rotation inside the ducts and/or the chambers, and coupled to the brushes.

Still in other alternative embodiments it is provided that the brushes are driven through helical movements. For the transmission of the motion to the brushes it is foreseen that it is provided transmission components comprising joints, chains, connecting rods or conjugated profiles; affordable by the skilled person in the art in view of the teachings up to now provided. In the case in which the speed of the mass of gases is too high, as for example when the endothermic engine is running at high speeds, there is the risk of not having sufficient time for the reaction in the chambers 6 to be completed.

In this case, to slow down the mass of gases and extend the time of transit in the chambers 6, it can be used the nozzles 90, which - dispensing a certain amount of air or cleaned gases directed in the opposite sense with respect to the mass of gases - causes a load loss, which slows down the mass of gases and mostly pushes upwards the sorbent which due to its high inertia did not adhere to the wall of the sleeve 8 and allows the chemical reaction of neutralization to be performed, exploiting as much as possible the sorbent inserted. The Applicant has moreover observed an unexpected effect relating to the arrangement of the cleaning devices (brushes, chains) inside the chambers and the sleeves: they collect indeed also the unreacted sorbent and they constitute authentic points of localized reaction, in which the dirty gases find an accumulation of sorbent available for the chemical reaction, with a considerable improvement in terms of efficiency and performance of the device 1.

Moreover, the concurrent presence of a plurality of chambers and cleaning devices inside each chamber creates a further unexpected effect which increases the yield of the device 1 it its whole: the turbulence of the flow of gases remarkably increases with respect to the case of a single chamber devoid of cleaning devices therein; the increased turbulence improves in the whole the yield as it generates a more homogeneous distribution of the sorbent inside the mass of dirty gases.

It should be observed that the device according to the invention, up now described, presents numerous advantages with respect to the known solutions: first of all the use of ceramic filtering sleeves makes it work also at high temperatures and does not require heat-exchangers to slow down the temperature of gases. Secondly, it may work, although for a limited period of time, also in the event of damage to the discharge screws: the presence of the collecting plenum indeed ensures to collect a certain quantity of fine particles even if the discharge screws are out of work, generating a lung effect.

Thirdly, also in the case in which the loading screw 4 should break, the device 1 ensures at least to partially eliminate the fine particles: also without sorbent indeed the gases pass into the sleeves being thus subjected to a mechanical filtering; in this sense thus it is not necessary to provide any duct of by-pass to exclude the filter from the path of the gases from the engine to the chimney.

Moreover, in case of failure to dispense the sorbent from the loading screw 4, the part which did not react and is accumulated on the cleaning devices (brushes, chains) ensures a certain (although limited in time) cleaning of the dirty gases.
So are achieved the above indicated purposes.

In some variants the form of the case 30 is achieved differently, to meet the different requirements of installation and assembly, still in other versions the case 30 is absent, in the sense that the various functional parts, alone or combined with each other, are mounted in different cases and operatively connected properly the ones with the others.

With reference to the reaction chambers 6 or to the sleeves 8, in some variants they are not cylindrical, but they have a polygonal or oval section, without going beyond the teachings of the present invention due to this reason.

In other embodiments, at last, the nozzles 90 of diffusion of gas are provided in correspondence of the end portion of each sleeve facing towards the respective chamber, or in practice in the junction area of the two.

## Claims

1. Dry sorbent injection DSI dry scrubber device (1) for the reduction of polluting emissions, in particular sulphur oxides and fine particles, from a stream of combustion gases, comprising:
- a first section of mixing and reaction (2) comprising an inlet (3) for a stream of dirty gases containing at least a pollutant to be removed and a mechanical dispensing device (4) of a sorbent material in said stream of dirty gases
- a second section of reaction (5), downstream of said first section (2) comprising at least one reaction chamber (6) of said stream of dirty gases with said sorbent material to generate the chemical/physical separation of said pollutant from said stream of gases, so as to obtain a cleaned stream of gases in which fine particles are dispersed in suspension generated by the reaction of said pollutant with said sorbent material
- a third section of removal (7) of said fine particles and of fine particles produced by unburned hydrocarbons, downstream of said second section (5), comprising at least one mechanical filter for the separation of said fine particles from said cleaned mass of gases
**characterized in that**
- said section of mixing and reaction (2) comprises a fluid distributor (21)
- said reaction section comprises a plurality of reaction chambers (6),
said distributor (21) being in fluid communication at least with said plurality of reaction chambers (6) for distributing said stream of dirty gases added with said sorbent material in said plurality of reaction chambers (6),
- said mechanical filter of said removal section (7) comprises a plurality of ceramic filtering sleeves (8), each in fluid communication with a reaction chamber (6)
- each filtering sleeve (8) and its respective reaction chamber (6) with which is in fluid communication being substantially aligned and engaged with each other so that said cleaned stream of gases, in which said fine particles are dispersed in suspension, crosses said filtering sleeves from the inside to the outside,
- each reaction chamber (6) being provided at least with a first cleaning device (22) in contact at least with an internal face of said reaction chamber (6)
- each sleeve (8) being provided with at least a second cleaning device (23).

2. Device according to the previous claim, wherein the first and the second cleaning device comprise brushes (22,23).

3. Device according to claims 1 or 2, wherein, for each sleeve (8) and related chamber (6), the first and the second cleaning device are coupled to an actuating means in common.

4. Device according to claim 3, wherein the actuating means is one among an articulated connection, preferably a chain or a flexible connection, preferably a wire.

5. Device according to claim 3, wherein the actuating means is a rigid connection, preferably a rod.

6. Device according to claim 3, wherein each actuating rod (24) extending in a longitudinal direction with respect to the development of said chamber (6) and/or of said sleeve (8).

7. Device according to one or more of claims 4 or 5, wherein said actuating means presents a free end external to said chamber and/or said sleeve, said free end being coupled to a joint (25) of motion transformation from rotary to linear reciprocating, being said joint (25) operatively connected with an engine to generate a rotary motion.

8. Device according to one or more of the previous claims, wherein said dispensing device (4) of a sorbent material is a loading screw (4) comprising a rotatable body with helical vanes (41) arranged inside a case (42) substantially cylindrical, open in correspondence of a free base (44) and provided with supply holes (43) in correspondence of a portion of side face not facing the mouth of an inlet duct (31) of said dirty gases.

9. Device according to the previous claim, wherein the helical vanes (41) have a variable step.

10. Device according to one or more of the preceding claims, wherein said third section further comprises one or more collecting hoppers (36) for collecting said particles, said hopper (36) being in fluid communication at least with the interior of said sleeves (8) and having at least one unloading screw (16) or a bucket conveyor for removal of said particles.

11. Device according to one or more of the preceding claims, comprising at least one gas diffusion nozzle (90) located in correspondence of a terminal portion of said sleeves (8) and oriented so as to deliver a flow of pressurized gas in the opposite direction to that of passage of said flue gas stream.

12. Device according to the preceding claim, wherein said diffusion nozzle is operatively connected to a blower or fan for the diffusion of a gas under pressure, said blower or fan being connected to a source of gas, preferably a source of cleaned flue gas downstream of said filtering sleeves (8).

13. Device according to one or more of the preceding claims, wherein said device comprises a case (30), which, with reference to an operating configuration of said device (1), has at least one inlet duct (31) of said dirty flue gas, open in correspondence of a lower face of the case (30), at least one outlet duct (32) of said cleaned flue gas in correspondence of an upper face of the case (30), at least one inlet (34) for said sorbent, in communication with a loading screw (4), at least one outlet (5) for said particulate in communication with an unloading screw (16), and wherein said first mixing section (2) is placed above said second reaction section (5), which is placed in turn above said third removal section (7).

## Patentansprüche

1. Trockenwäscher (1) mit Einspritzung trockenen Adsorbens (DSI) zur Verminderung verunreinigender Emissionen, insbesondere Schwefeloxide und feine Teilchen, aus einem Verbrennungsgasstrom, umfassend:
- einen ersten Misch- und Reaktionsabschnitt (2), umfassend einen Einlass (3) für einen Schmutzgasstrom, der mindestens einen zu beseitigenden Schadstoff enthält, und eine mechanische Vorrichtung zum Abgeben (4) des Adsorbensmaterials in den Schmutzgasstrom,
- einen zweiten Reaktionsabschnitt (5), stromabwärts von dem ersten Abschnitt (2), umfassend mindestens eine Reaktionskammer (6) für den Schmutzgasstrom mit dem Adsorbensmaterial, um die physikalisch-chemische Trennung des Schadstoffs vom Schmutzgasstrom zu erzeugen, um einen gereinigten Gasstrom zu erhalten, in dem feine Teilchen in einer Suspension dispergiert sind, die durch die Reaktion des Schadstoffs mit dem Adsorbensmaterial erzeugt wird,
- einen dritten Abschnitt zum Entfernen (7) der feinen Teilchen und der durch unverbrannte Kohlenwasserstoffe erzeugten, feinen Teilchen, stromabwärts von dem zweiten Abschnitt (5), umfassend mindestens einen mechanischen Filter zum Trennen der feinen Teilchen von der gereinigten Gasmasse,
**dadurch gekennzeichnet, dass**
- der Misch- und Reaktionsabschnitt (2) einen Fluidverteiler (21) umfasst,
- der Reaktionsabschnitt mehrere Reaktionskammern (6) umfasst,
wobei der Verteiler (21) in fluidischer Verbindung mit mindestens mehreren Reaktionskammern (6) steht, um den Schmutzgasstrom, dem das Adsorbensmaterial zugesetzt wurde, in die mehreren Reaktionskammern (6) zu verteilen,
- der mechanische Filter des Abschnitts zum Entfernen (7) mehrere Keramikfilterhülsen (8) umfasst, die jeweils in fluidischer Verbindung mit einer Reaktionskammer (6) stehen,
- wobei jede Filterhülse (8) und deren dazugehörige Reaktionskammer (6), mit der sie in fluidischer Verbindung steht, im Wesentlichen gefluchtet ist und gegenseitig im Eingriff steht, so dass der gereinigte Gasstrom, in dem die feinen Teilchen in einer Suspension dispergiert sind, die Filterhülsen von innen nach außen durchströmt,
- wobei jede Reaktionskammer (6) mit mindestens einer ersten Reinigungsvorrichtung (22) versehen ist, die in Kontakt mit mindestens einer Innenfläche der Reaktionskammer (6) steht,
- wobei jede Hülse (8) mit mindestens einer zweiten Reinigungsvorrichtung (23) versehen ist.

2. Vorrichtung nach dem vorhergehenden Anspruch, wobei die erste und die zweite Reinigungsvorrichtung Bürsten (22, 23) umfassen.

3. Vorrichtung nach Anspruch 1 oder 2, wobei für jede Hülse (8) und die dazugehörige Kammer (6) die erste und die zweite Reinigungsvorrichtung mit einer gemeinsamen Betätigungseinrichtung verbunden sind.

4. Vorrichtung nach Anspruch 3, wobei die Betätigungseinrichtung eine unter den gelenkigen Verbindungen, vorzugsweise eine Kette oder eine flexible Verbindung, vorzugsweise ein Draht ist.

5. Vorrichtung nach Anspruch 3, wobei die Betätigungseinrichtung eine starre Verbindung, vorzugsweise ein Stab ist.

6. Vorrichtung nach Anspruch 3, wobei jeder Betätigungsstab (24) sich in Längsrichtung bezogen auf die Entwicklung der Kammer (6) und/oder der Hülse (8) erstreckt.

7. Vorrichtung nach einem oder mehreren der Ansprüche 4 oder 5, wobei die Betätigungseinrichtung ein freies Ende außerhalb der Kammer und/oder der Hülse aufweist, wobei das freie Ende mit einem Gelenk (25) zur Umwandlung der Drehbewegung in eine lineare Hin- und Herbewegung gekoppelt ist, wobei das Gelenk (25) mit einem Motor zur Erzeugung einer Drehbewegung wirkverbunden ist.

8. Vorrichtung nach einem oder mehreren der vorstehenden Ansprüche, wobei die Vorrichtung zum Abgeben (4) des Absorbensmaterials eine Ladeschnecke (4) ist, umfassend einen drehbaren Körper mit Schraubenflügeln (41), der im Inneren eines im wesentlichen zylinderförmigen Gehäuses (42) angeordnet, an einer freien Basis (44) offen und mit Einfüllöffnungen (43) an einem Abschnitt der Seitenfläche versehen ist, die nicht der Mündung eines Einlasskanals (31) für die Schmutzgase gegenüberliegt.

9. Vorrichtung nach dem vorstehenden Anspruch, wobei die Schraubenflügel (41) einen variablen Gewindegang aufweisen.

10. Vorrichtung nach einem oder mehreren der vorstehenden Ansprüche, wobei der dritte Abschnitt ferner einen oder mehrere Sammelbehälter (36) zum Sammeln der Teilchen umfasst, wobei der Sammelbehälter (36) in fluidischer Verbindung mit mindestens dem Inneren der Hülsen (8) steht und mindestens eine Abladeschnecke (16) oder ein Becherwerk zum Entfernen der Teilchen aufweist.

11. Vorrichtung nach einem oder mehreren der vorstehenden Ansprüche, umfassend mindestens eine Gasdiffusionsdüse (90), die an einem Endabschnitt der Hülsen (8) angeordnet und ausgerichtet ist, um einen unter Druck stehenden Gasstrom in die dem Durchgang des Rauchgasstroms entgegengesetzte Richtung zuzuführen.

12. Vorrichtung nach dem vorstehenden Anspruch, wobei die Gasdiffusionsdüse mit einem Gebläse oder einem Lüfterrad zur Diffusion eines unter Druck stehenden Gases wirkverbunden ist, wobei das Gebläse oder das Lüfterrad mit einer Gasquelle, vorzugsweise mit einer Quelle von gereinigtem Rauchgas stromabwärts der Filterhülsen, verbunden ist (8).

13. Vorrichtung nach einem oder mehreren der vorstehenden Ansprüche, wobei die Vorrichtung ein Gehäuse (30) umfasst, welches mit Bezug auf eine Betriebskonfiguration der Vorrichtung (1) mindestens einen an einer unteren Seite des Gehäuses (30) offenen Einlasskanal (31) für das verschmutzten Rauchgas, mindestens einen Auslasskanal (32) für das gereinigte Rauchgas an einer oberen Seite des Gehäuses (30), mindestens einen Einlass (34) für das Adsorbens in Verbindung mit einer Ladeschnecke (4) und mindestens einen Auslass (5) für das Partikulat in Verbindung mit einer Abladeschnecke (16) aufweist, und wobei der erste Mischabschnitt (2) oberhalb des zweiten Reaktionsabschnitts (5) angeordnet ist, der wiederum oberhalb des dritten Abschnitts zum Entfernen (7) angeordnet ist.

## Revendications

1. Dispositif épurateur à sec par injection de sorbant sec DSI (1) pour la réduction d'émissions polluantes, en particulier des oxydes de soufre et des particules fines, dans un flux de gaz de combustion, comprenant :
- une première section de mélange et de réaction (2) comprenant une entrée (3) pour un flux de gaz sales contenant au moins un polluant à éliminer et un dispositif de distribution mécanique (4) d'un matériau sorbant dans ledit flux de gaz sales
- une deuxième section de réaction (5), en aval de ladite première section (2) comprenant au moins une chambre de réaction (6) dudit flux de gaz sales avec ledit matériau sorbant pour générer la séparation chimique/physique dudit polluant par rapport audit flux de gaz, de manière à obtenir un flux de gaz épuré dans lequel des particules fines sont dispersées en suspension, générées par la réaction dudit polluant avec ledit matériau sorbant
- une troisième section d'élimination (7) desdites particules fines et de particules fines produites par des hydrocarbures non brûlés, en aval de ladite deuxième section (5), comprenant au moins un filtre mécanique pour la séparation desdites particules fines par rapport à ladite masse de gaz épurée **caractérisé en ce que**
- ladite section de mélange et de réaction (2) comprend un distributeur de fluide (21)
- ladite section de réaction comprend une pluralité de chambres de réaction (6),
ledit distributeur (21) étant en communication de fluide au moins avec ladite pluralité de chambres de réaction (6) pour distribuer ledit flux de gaz sales avec ledit matériau sorbant ajouté dans ladite pluralité de chambres de réaction (6),
- ledit filtre mécanique de ladite section d'élimination (7) comprend une pluralité de manchons filtrants céramiques (8), chacun en communication de fluide avec une chambre de réaction (6)
- chaque manchon filtrant (8) et sa chambre de réaction respective (6) avec laquelle il est en communication de fluide étant sensiblement alignés et engagés l'un avec l'autre de manière que ledit flux de gaz épuré, dans lequel lesdites particules fines sont dispersées en suspension, traverse lesdits manchons filtrants de l'intérieur vers l'extérieur,
- chaque chambre de réaction (6) étant munie d'au moins un premier dispositif de nettoyage (22) en contact au moins avec une face interne de ladite chambre de réaction (6)
- chaque manchon (8) étant muni d'au moins un deuxième dispositif de nettoyage (23).

2. Dispositif selon la revendication précédente, dans lequel le premier et le deuxième dispositif de nettoyage comprennent des brosses (22,23).

3. Dispositif selon les revendications 1 ou 2, dans lequel, pour chaque manchon (8) et la chambre relative (6), le premier et le deuxième dispositif de nettoyage sont couplés à un moyen d'actionnement commun.

4. Dispositif selon la revendication 3, dans lequel le moyen d'actionnement est un parmi une connexion articulée, de préférence une chaîne, ou une connexion flexible, de préférence un câble.

5. Dispositif selon la revendication 3, dans lequel le moyen d'actionnement est une connexion rigide, de préférence une tige.

6. Dispositif selon la revendication 3, dans lequel chaque tige d'actionnement (24) s'étend dans une direction longitudinale par rapport au développement de ladite chambre (6) et/ou dudit manchon (8).

7. Dispositif selon une ou plusieurs des revendications 4 ou 5, dans lequel ledit moyen d'actionnement présente une extrémité libre externe à ladite chambre et/ou audit manchon, ladite extrémité libre étant couplée à un joint (25) de transformation de mouvement de rotatif à linéaire alternatif, ledit joint (25) étant connecté fonctionnellement à un moteur pour générer un mouvement de rotation.

8. Dispositif selon une ou plusieurs des revendications précédentes, dans lequel ledit dispositif de distribution (4) d'un matériau sorbant est une vis de chargement (4) comprenant un corps rotatif avec des aubes hélicoïdales (41) agencé à l'intérieur d'une enveloppe (42) sensiblement cylindrique, ouverte en correspondance d'une base libre (44) et pourvue de trous d'alimentation (43) en correspondance d'une portion de face latérale ne faisant pas face à l'embouchure d'un conduit d'entrée (31) desdits gaz sales.

9. Dispositif selon la revendication précédente, dans lequel les aubes hélicoïdales (41) ont un pas variable.

10. Dispositif selon une ou plusieurs des revendications précédentes, dans lequel ladite troisième section comprend en outre une ou plusieurs trémies de collecte (36) pour recueillir lesdites particules, ladite trémie (36) étant en communication de fluide au moins avec l'intérieur desdits manchons (8) et ayant au moins une vis de déchargement (16) ou un transporteur à godets pour l'enlèvement desdites particules.

11. Dispositif selon une ou plusieurs des revendications précédentes, comprenant au moins une buse de diffusion de gaz (90) située en correspondance d'une portion terminale desdits manchons (8) et orientée de manière à délivrer un flux de gaz sous pression dans la direction opposée à celle de passage dudit flux de gaz de combustion.

12. Dispositif selon la revendication précédente, dans lequel ladite buse de diffusion est connectée fonctionnellement à une soufflante ou un ventilateur pour la diffusion d'un gaz sous pression, ladite soufflante ou ledit ventilateur étant connecté à une source de gaz, de préférence une source de gaz de combustion épuré en aval desdits manchons filtrants (8).

13. Dispositif selon une ou plusieurs des revendications précédentes, dans lequel ledit dispositif comprend une enveloppe (30), qui, en référence à une configuration de fonctionnement dudit dispositif (1), comporte au moins un conduit d'entrée (31) dudit gaz de combustion sale, ouvert en correspondance d'une face inférieure de l'enveloppe (30), au moins un conduit de sortie (32) dudit gaz de combustion épuré en correspondance d'une face supérieure de l'enveloppe (30), au moins une entrée (34) pour ledit sorbant, en communication avec une vis de chargement (4), au moins une sortie (5) pour lesdites particules en communication avec une vis de déchargement (16), et dans lequel ladite première section de mélange (2) est placée au-dessus de ladite deuxième section de réaction (5), qui est placée à son tour au-dessus de ladite troisième section d'élimination (7).
